# EUROPÄISCHE PATENTSCHRIFT

(11) **EP 0 824 577 B1**
(45) Veröffentlichungstag und Bekanntmachung des Hinweises auf die Patenterteilung: **01.08.2001**
(21) Anmeldenummer: 96914187.8
(22) Anmeldetag: 09.05.1996
(51) Int. Cl.: C10M 105/32, H01B 3/30

(54) **GLEITMITTEL FÜR LACKDRÄHTE**
LUBRICANT FOR VARNISHED WIRES
LUBRIFIANT POUR FILS VERNIS

(30) Priorität: 11.05.1995 DE 19517199
(43) Veröffentlichungstag der Anmeldung: 25.02.1998
(73) Patentinhaber: SCHENECTADY INTERNATIONAL, INC., Schenectady New York 12309 (US)
(72) Erfinder: LOPEZ DE BRITO, J., J., 04788-130 Sao Paolo (BR); SONCINI, Giancarlo, 01531-060 Sao Paolo (BR); LIENERT, Klaus-Wilhelm, D-22763 Hamburg (DE)
(74) Vertreter: Fitzner, Ulrich, Dr.
(86) Internationale Anmeldenummer: EP9601955
(87) Internationale Veröffentlichungsnummer: WO9635763

(56) Entgegenhaltungen:
- EP-A- 0 103 307
- EP-A- 0 485 979
- DE-A- 3 237 022
- US-A- 4 379 807

## Beschreibung

Die vorliegende Erfindung betrifft ein neuartiges Gleitmittel für Lackdrähte, insbesondere Gleitmittelbelege für in hermetischen Motoren eingesetzte Kupferdrahtwicklungen.

Lackierte Kupferdrähte werden mit einem Gleitmittel überzogen um ihre Verarbeitbarkeit, d.h. beim Wickeln einer Spule, zu verbessern. Klassische Gleitmittel bestehen aus einer 0,5 bis 2 %-igen Lösung von Paraffinen oder Wachsen in einem leicht flüchtigen Lösemittel. Bei der Applikation auf den Draht verdunstet das Lösemittel und zurück bleibt der Paraffin- oder Wachsfilm.

Drähte mit diesen Gleitmitteln können beim Einsatz in hermetischen Motoren, das sind Motoren, die in Kühlaggregaten im Kühlmedium laufen, zu Problemen führen. Der Grund ist, daß der Abrieb dieser Gleitmittel in den neuen Kühlmedien nicht löslich ist und es kann zum Verstopfen von Düsen und Leitungen mit einem kleinen Querschnitt führen. Beim Betrieb des Elektromotors im Kühlmedium kommt es durch Vibrationen und durch Scheuem zu diesem Abrieb.

In den 40-iger Jahren wurden als Kühlmedien für Kühlschränke, Tiefkühltruhen und industrielle Kühlanlagen Fluorchlorkohlenwasserstoffe eingeführt. Diese Stoffklasse setzte sich für diese Anwendung durch und verdrängte das dafür benutzte Ammoniak. Für diese neuen Kühlmittel wurden die entsprechenden Schmierstoffe entwickelt. Es waren zuerst spezielle Erdölfraktionen. Später wurden vollsynthetische Alkylbenzole und Polyalphaolefine als Schmiermittel verwendet. Als Gleitmittel für Drähte, die in diesen Motoren zum Einsatz kamen, bewährten sich Paraffin und andere Kohlenwasserstoffwachse. Der Abrieb dieser Gleitmittel war in dem Betriebsmedium löslich.

Im Lauf der Zeit wurde erkannt, daß der Einsatz von Fluorchlorkohlenwasserstoffen für den Abbau der Ozonschicht der Atmosphäre verantwortlich ist. Genauer gesagt, es sind die Chloratome, die in diesen Verbindungen enthalten sind, die in das Ozongleichgewicht eingreifen (Physics World, April 1994, 49-55). Im Montrealer Protokoll 1987 wurde ein Zeitplan für den Ausstieg aus der Herstellung von Fluorchlorkohlenwasserstoffen festgeschrieben.

Die Industrie entwickelte als Alternative zu den Fluorchlorkohlenwasserstoffen die Fluorkohlenwasserstoffe. Mit diesen neuen Kühlmedien waren die alten Schmierstoffe unverträglich. Es wurden neue, aus Estem bestehende, entwickelt. Z.B. die Serie lcematic® von Castrol. In diesen Gemischen von neuen Kühlmitteln und neuen Schmierstoffen ist der Abrieb der bis dahin verwendeten Gleitmittel der Lackdrähte nicht mehr löslich. Daher müssen neue Gleitmittel entwickelt werden.

In der EP 0267736 werden konventionelle paraffinische und konventionelle polymere Gleitmittel beschrieben.

In der EP 0103307A werden konventionell aufgebrachte Gleitmittel, polymeren Aufbaues, beschrieben. Die verbesserte Technik beruht auf der Substitution des terminalen Wasserstoffes in einem Polypropylenglycols durch einen organischen Rest.

In der DE 3237022A wird ein Gleitmittel beschrieben, daß aus einem aliphatischen Kohlenwasserstoffgemisch als Lösemittel und aus 1 % Paraffinwachs sowie aus 1 % hydriertem Triglycerid besteht Das Paraffinwachs hat einen Schmelzpunkt von 50 bis 52°C. Das hydrierte Triglycerid ist ein kommerzielles Produkt mit einem Schmelzpunkt von 47 bis 50°C. In dem Triglycerid sind annähernd 8 % C₁₄ -, 34 % C₁₆ -, 27 % C₁₈ -, 16 % C₂₀ - und 15 % C₂₂ -Fettsäuren enthalten. Dieses Gleitmittel wird auf einem mit einem Polyamidimid beschichteten Draht aufgebracht. Zusätzlich kann auch ein internes Gleitmittel verwendet werden. Dieses wird in einer Konzentration von 1 % dem Polyamidimid zugesetzt. Das interne Gleitmittel besteht aus Tallölfettsäureestem. Die Zusammensetzung ist annähernd 54 % C₁₂ - C₁₄ - Fettalkoholester von Tallöl, 24,5 % Tripentaerythritester von Tallölfettsäuren, 9,8 % Tetrapentaerythritester von Tallölfettsäuren, 6,3 % freie Tallölfettsäuren und 4,8 % freie C₁₂ - C₁₄-Alkohole.

In der US-A-4379807 wird schließlich ein Gleitmittel beschrieben, das mit auf dem Markt angebotenen Kühlmitteln verträglich ist. Als Gleitmittel kommen danach Ethylen- und Propylenoxid zum Einsatz.

Es ist davon auszugehen, daß das interne Gleitmittel allein die gewünschte gute Gleitfähigkeit nicht bewirkt. Das hydrierte Triglycerid muß mit einem Paraffinwachs zusammen aufgebracht werden, um den niedrigen Reibungskoeffizienten zu erzielen. Auch ist davon auszugehen, daß der paraffinhaltige Abrieb in den neuen Fluorkohlenwasserstoff-Esterschmierstoff-Gemischen nicht löslich ist.

Aufgabe der vorliegenden Erfindung ist es demgemäß, ein Gleitmittel für Lackdrähte zur Verfügung zu stellen, das auf den Lackdraht auftragbar ist, einen guten Reibungskoeffizienten gewährleistet, lagerstabil ist, eine einfache Verarbeitung ermöglicht und mit den modernen, heute auf dem Markt angebotenen Kühlmitteln verträglich ist.

Diese Aufgabe wird dadurch gelöst, daß das Gleitmittel Pentaerythriffettsäureester, Fettsäuremethylester und Lösemittel oder Lösemittelgemische enthält.

Bevorzugt ist, daß das Gleitmittel 2 bis 0,1 Gew.-%, vorzugsweise 0,4 bis 0,1 Gew.-% Pentaerythriffettsäureester, 3,0 bis 0,4 Gew.-% Fettsäuremethylester und 94 bis 99,9 Gew.-%, vorzugsweise 96,6 bis 99,5 Gew.-% Lösemittel oder Lösemittelgemisch enthält.

Es ist überraschend, daß die beschriebene Mischung aus Pentaerythritfettsäureester mit Fettsäuremethylester die oben erwähnten Anforderungen erfüllt. So läßt sich die Estermischung in einem Lösemittel lösen und auf Kupferlackdrähte aus einer Lösung oder aus der Schmelze aufbringen. Sie ist ein gutes Gleitmittel. Der Abrieb ist in einem Gemisch aus Fluorkohlenwasserstoff plus Schmieröl auf Esterbasis löslich.

Pentaerythritfettsäureester sind bekannt und werden vielfach als Additive, Weichmacher und als Schmieröle benutzt (Ullmanns Encyklopädie der technischen Chemie, Ausgabe 1964, Band 15, Seite 292). Der erfindungsgemäß bevorzugte Pentaerythritfettsäureester ist ein Gemisch, das 70-74% Ölsäure enthält.
Der erfindungsgemäße Pentaerythritfettsäureester wurde aus handelsüblichem Pentaerythrit und einer technischen Ölsäure mit folgender Zusammensetzung hergestellt: C₁₂ max 0,5 %, C₁₄ max 3,0 %, C₁₆ 3,5-6,5 %, C_{16:1} 3,5-7,5 %, C₁₈ 2,0 % max, C_{18:1} 70,0-74,0 %, C_{18:2} 4,0-10,5 %, C_{18:3} 1,0-3,0 %, C₂₀ 1,0-2,0. Das Fettsäurengemisch hat eine Säurezahl von 199-203 mg KOH/g, eine Verseifungszahl von 200-204 mg KOH/g, eine Jodzahl von 90-95 g/100 g und einen Trübungspunkt von 7 °C.
Ebenso ist es möglich, Fettsäurengemische mit mindestens 40 % C_{18:1}, oder aber reines C_{18:1} (Ölsäure) zu verwenden.

Neben Pentaerythrit können auch andere Polyole eingesetzt werden, wie z.B. Dipentaerythrit, Trimethylolpropan, Trimethylolethan, Sorbitol, Manitol etc. Die Veresterung kann mit oder ohne den Einsatz von Katalysatoren erfolgen.

Fettsäurealkylester sind großtechnische Produkte (Römpp Chemie Lexikon, Band 2, Fettsäuremethylester). Je nach der Fettsäure gibt es unterschiedliche Produkte. Fettsäuremethylester lassen sich durch Veresterung von Fettsäure mit Methanol oder durch Umesterung von gesättigten und/oder ungesättigten Ölen und Fetten mit Methanol gewinnen. Erfindungsgemäß bevorzugt wird die Verwendung von Methylhydroxystearat, ein Produkt, das durch die Umesterung von Rizinusöl mit Methanol und Hydrierung hergestellt wird. Dieses technische Methylhydroxystearat hat üblicherweise eine Säurezahl von ca. 5 mg KOH/g, eine Hydroxylzahl von 158-170 mg KOH/g, eine Verseifungszahl von 175-183 mg KOH/g und einen Schmelzpunkt von 50 bis 52°C.
Ebenso können Fettsäurengemische mit mindestens 60 % Hydroxystearinmethylester oder der reine Hydroxystearinmethylester selbst verwendet werden. Auch geringe Mengen Ethyl- oder Propylester können enthalten sein.

Das erfindungsgemäße Gleitmittel besteht aus:
a) Pentaerythritfettsäureestem; wie erwähnt, können auch Fettsäureester anderer Polyole verwendet werden;
b) Fettsäurealkylester wie oben beschrieben; bei einigen Zusammensetzungen nach a) können die Fettsäurealkylester entfallen;
c) Lösemittel oder Lösemittelgemische; hierfür müssen Kohlenwasserstoffe, vorzugsweise Aromaten, verwendet werden (Ethylbenzol, Xylol, Toluol etc.). Wichtig sind auch Alkohole (Ethyl, Propyl, Butyl, Amyl, Benzyl etc.). Je nach Zusammensetzung der aktiven Komponente können auch andere Lösemittel eingesetzt werden, um die Stabilität der Lösung zu erhöhen (Diaceton-Alkohol, Cyclohexanon, Dimethylacetamid etc.).

Die Herstellung der erfindungsgemäßen Gleitmittel erfolgt durch Schmelzen von Pentaerythritfettsäureestem und Fettsäuremethylestem. Die Schmelztemperatur beträgt vorzugsweise ca. 80°C. Die Schmelze wird in den oben beschriebenen Lösemitteln bzw. Lösemittelgemischen gelöst und auf Raumtemperatur abgekühlt. Die erhaltene klare Lösung wird auf die Lackdrähte nach dem letzten Durchzug durch die Lackiermaschine aufgetragen.

Gemäß der Erfindung kann als zu beschichtender elektrisch leitender Lackdraht jeder elektrische Leiter verwendet werden, der eine Gleitmittelbeschichtung braucht, obwohl die Erfindung besonders auf Lackdrähte und insbesondere auf Wicklungsdrähte für hermetische Motoren anwendbar ist. Derartige Drähte bestehen üblicherweise aus Kupfer oder Aluminium.

Bei den Lackschichten kann es sich erfindungsgemäß um Polyamidimid handeln. Dieses Material kann nach dem Stand der Technik entweder als einzige Isolationsschicht oder als Teil eines mehrschichtigen Systems aufgebracht werden (vgl. z.B. DE 3237022). Für mehrschichtige Systeme kann jedes verträgliche Grundschichtmaterial verwendet werden. Beispielsweise sind Polyester auf der Basis von Tris-2-(hydroxyethyl)-isocyanurat (THEIC) die bevorzugte Grundschicht für eine Polyamidimid-Decklackschicht.

Das erfindungsgemäße Gleitmittel wird vorzugsweise nach dem letzten Durchzug des Drahtes durch die Lackiermaschine aufgetragen. Es kann in jeder herkömmlichen Weise aufgebracht werden, beispielsweise mit Beschichtungsdüse, Rollen oder Filzapplikatoren. Gemäß der Erfindung wird vorzugsweise die Lösung des Gleitmittels aufgebracht und an der Luft getrocknet, wobei ein sehr dünner Film des Gleitmittels auf dem Drahtlack verbleibt.

Im folgenden wird die Erfindung unter Bezugnahme auf die Beispiele näher erläutert.

### Beispiel 1A: Herstellung eines Pentaerythritfettsäureesters

Die Herstellung erfolgt in einem 500 ml Glaskolben, der mit einem Rührer, einem Thermometer und einer Destillationsbrücke ausgestattet ist und durch den ein konstanter Stickstoffstrom geleitet wird.
Unter diesen Bedingungen werden beispielsweise 80,6 g Ölsäure und 19,35 g Pentaerythrit mit 30°C/h und unter Zufuhr von Inertgas auf 200°C erhitzt. innerhalb von 2 Stunden müssen 240°C erreicht sein. Der Ester wird bei 240°C gehalten, bis die Säurezahl gleich oder weniger als 1 mg KOH/g ist. Danach wird der Ester auf 80°C abgekühlt und abgefüllt. Bei dieser Synthese werden ca. 5,2 g Destillat erhalten.

### Beispiel 1B: Herstellung eines Pentaerythritfettsäureesters und eines Trimethylolpropanfettsäureesters

Die Herstellung erfolgt in einem 500 ml Glaskolben, der mit einem Rührer, einem Thermometer und einer Destillationsbrücke ausgestattet ist und durch den ein konstanter Stickstoffstrom geleitet wird.
Unter diesen Bedingungen werden beispielsweise 80,6 g Ölsäure und 14,47 g Pentaerythrit, 1,93 g Trimethylolpropan mit 30°C/h und unter Zufuhr von Inertgas auf 200°C erhitzt. Innerhalb von 2 Stunden müssen 240°C erreicht sein. Der Ester wird bei 240°C gehalten, bis die Säurezahl gleich oder weniger als 1 mg KOH/g ist Danach wird der Ester auf 80°C abgekühlt und abgefüllt. Bei dieser Synthese werden ca. 5,2 g Destillat erhalten.

### Beispiel 1C: Herstellung eines Pentaerythritfettsäureesters und eines D-Sorbitfettsäureesters

Die Herstellung erfolgt in einem 500 ml Glaskolben, der mit einem Rührer, einem Thermometer und einem Rückflußkühler mit einem Wasserabscheider ausgestattet ist und durch den ein konstanter Stickstoffstrom geleitet wird. Der Abscheider wird mit Xylol gefüllt.
Unter diesen Bedingungen werden beispielsweise 76,16 g Ölsäure und 16,51 g Pentaerythrit, 3,51 g Sorbit, 3,72 g Xylol, 0,1 g Zinn(II)octoat unter Zufuhr von Inertgas und unter mäßigem Rückfluß auf 200°C erhitzt Innerhalb von 2 Stunden müssen 240°C erreicht sein. Der Ester wird bei 240°C gehalten, bis die Säurezahl gleich oder weniger als 1 mg KOH/g ist. Danach wird der Ester auf 80°C abgekühlt und abgefüllt. Bei dieser Synthese werden ca. 4,9 g Destillat erhalten.

### Beispiel 2: Fettsäuremethylester

Für die Versuche wurde ein handelsübliches technisches Methylhydroxystearat verwendet. Der Schmelzpunkt betrug 51°C, die Hydroxylzahl 169 mg KOH/g und die Verseifungszahl 181 mg KOH/g.

### Beispiel 3: Herstellung eines Gleitmittels

2 g Ester aus Beispiel 1A und 2 g Ester aus Beispiel 2 werden bei 80 °C geschmolzen. Die Schmelze wird mit 70 g Xylol und 30 g Butanol verdünnt und auf Raumtemperatur abgekühlt. Man erhält eine klare Lösung.

### Beispiel 4: Herstellung eines Gleitmittels

0,25 g Ester aus Beispiel 1B und 2,25 g Ester aus Beispiel 2 werden bei 80 °C geschmolzen. Die Schmelze wird mit 78 g Xylol und 19.50 g Butanol verdünnt und auf Raumtemperatur abgekühlt.

### Beispiel 5: Herstellung eines Gleitmittels

Analog wird aus 3,9 g Ester aus Beispiel 1C, 0,1 g Ester aus Beispiel 2, 86 g Xylol und 10 g Hexanol wird ein Gleitmittel formuliert.

Die so hergestellten Gleitmittel werden auf Lackdrähte nach dem letzten Durchzug durch die Lackiermaschine aufgetragen. Der verwendete Draht ist mit einem Zweischichtlacksystem, Grundlack THEIC-Polyester plus Decklack Polyamidimid lackiert.

Mit den Drähten wird jeweils wie folgt verfahren: Aus einem Drahtstück von ca. 750 mm Länge wird, wie in IEC 851-5/4,3 beschrieben, ein Twist hergestellt. Aus dem Twist werden 240 mm herausgeschnitten. Dieses Teilstück hat 10 Windungen. Die entgegengesetzten Enden der Drähte aus dem Twist werden in eine Zerreißmaschine Lloyd M30K eingespannt. Es wird die Kraft in Newton gemessen, um den Twist mit einer Geschwindigkeit von 200 m/min auseinander zu ziehen.

Es werden je fünf Twiste hergestellt und ausgeprüft. Gleichzeitig wurden auch fünf Twiste eines Drahtes geprüft, der mit einem konventionellen paraffinischen Gleitmittel beschichtet war.

Für einen Standarddraht, d.h. ein Draht der ein paraffinisches Gleitmittel hat, wurde eine mittlere Kraft von 2,5 Newton gemessen. Für die Drähte aus den Beispielen 3-4 wurden 2,8 bis 3,4 Newton gefunden.

## Patentansprüche

1. Gleitmittel für Lackdrähte,
**dadurch gekennzeichnet**, daß es Pentaerythritfettsäureester, Fettsäuremethylester und Lösemittel oder ein Lösemittelgemisch enthält.

2. Gleitmittel nach Anspruch 1,
**dadurch gekennzeichnet,** daß es 2 bis 0,1 Gew.-%, vorzugsweise 0,4 bis 0,1 Gew.-% Pentaerythritfettsäureester, 3,0 bis 0,4 Gew.-% Fettsäuremethylester und 94 bis 99,9 Gew.-%, vorzugsweise 96,6 bis 99,5 Gew.-% Lösemittel oder Lösemittelgemisch enthält.

3. Gleitmittel nach einem der Ansprüche 1 oder 2,
**dadurch gekennzeichnet,** daß der Pentaerythritfettsäureester ein Gemisch ist, das 70-74 Gew.-% Ölsäure enthält.

4. Gleitmittel nach einem der Ansprüche 1 bis 3,
**dadurch gekennzeichnet**,daßesalsFettsäure Methylestermethylhydroxystearat enthält.

5. Gleitmittel nach einem der Ansprüche 1 bis 4,
**dadurch gekennzeichnet**, daß die Lösemittel Toluol, Xylol, Ethylbenzol oder aromatische Benzinfraktionen sind.

6. Gleitmittel nach Anspruch 5,
**dadurch gekennzeichnet**, daß die Lösemittel im Gemisch mit Methanol,
Ethanol, Propanol, Isopropanol, Butanol, Hexanol, Octanol, Decanol vorliegen.

7. Gleitmittel nach Anspruch 6,
**dadurch gekennzeichnet**, daß die Lösemittel aus 100 bis 50 Gew.-%
Toluol, Xylol, Ethylbenzol oder aromatischen Benzinfraktionen und 0 bis 50 Gew.-%
Methanol, Ethanol, Propanol, Isopropanol, Butanol, Hexanol, Octanol und/oder
Decanol bestehen.

8. Verfahren zur Herstellung des Gleitmittels nach einem der Ansprüche 1 bis 7,
**dadurch gekennzeichnet,** daß Pentaerythritfettsäureester und
Fettsäuremethylester geschmolzen, die so erhaltene Schmelze in einem Lösemittel
gelöst und auf Raumtemperatur abgekühlt wird.

9. Verfahren nach Anspruch 8,
**dadurch gekennzeichnet ,**daß Pentaerythritfettsäureester und
Fettsäuremethylester bei ca. 80 °C geschmolzen werden.

10. Verwendung des Gleitmittels nach einem der Ansprüche 1 bis 7 für vorzugsweise
in hermetischen Motoren eingesetzte, lackierte Kupferwickeldrähte.

## Claims

1. Lubricant for enamelled wires, characterized in that it comprises pentaerythritol fatty acid esters, fatty acid methyl esters and solvents or a solvent mixture.

2. Lubricant according to Claim 1, characterized in that it contains from 2 to 0.1% by weight, preferably from 0.4 to 0.1% by weight, of pentaerythritol fatty acid ester, from 3.0 to 0.4% by weight of fatty acid methyl ester and from 94 to 99.9% by weight, preferably from 96.6 to 99.5% by weight, of solvent or solvent mixture.

3. Lubricant according to one of Claims 1 or 2, characterized in that the pentaerythritol fatty acid ester is a mixture containing 70-74% by weight oleic acid.

4. Lubricant according to one of Claims 1 to 3, characterized in that it comprises methyl ester methyl hydroxystearate as fatty acid.

5. Lubricant according to one of Claims 1 to 4, characterized in that the solvents are toluene, xylene, ethylbenzene or aromatic petroleum spirit fractions.

6. Lubricant according to Claim 5, characterized in that the solvents are present in a mixture with methanol, ethanol, propanol, isopropanol, butanol, hexanol, octanol, decanol.

7. Lubricant according to Claim 6, characterized in that the solvents comprise from 100 to 50% by weight toluene, xylene, ethylbenzene or aromatic petroleum spirit fractions and from 0 to 50% by weight methanol, ethanol, propanol, isopropanol, butanol, hexanol, octanol and/or decanol.

8. Process for preparing the lubricant according to one of Claims 1 to 7, characterized in that pentaerythritol fatty acid esters and fatty acid methyl esters are melted, the resulting melt is dissolved in a solvent and the solution is cooled to room temperature.

9. Process according to Claim 8, characterized in that pentaerythritol fatty esters and fatty acid methyl esters are melted at about 80°C.

10. Use of the lubricant according to one of Claims 1 to 7 for enamelled copper winding wires preferably used in hermetic motors.

## Revendications

1. Lubrifiant pour fils laqués, caractérisé en ce qu'il contient un ester d'acide gras de pentaérythritol, un ester méthylique d'acide gras et un solvant ou un mélange de solvants.

2. Lubrifiant selon la revendication 1, caractérisé en ce qu'il contient 2 à 0,1% en poids, de préférence 0,4 à 0,1% en poids, d'ester d'acide gras de pentaérythritol, 3,0 à 0,4% en poids d'ester méthylique d'acide gras et 94 à 99,9% en poids, de préférence 96,6 à 99,5% en poids de solvant ou de mélange de solvants.

3. Lubrifiant selon l'une quelconque des revendications 1 ou 2, caractérisé en ce que l'ester d'acide gras de pentaérythritol est un mélange qui contient 70 à 74% d'acide oléique.

4. Lubrifiant selon l'une quelconque des revendications 1 à 3, caractérisé en ce qu'il contient comme acide gras un ester méthylique de méthylhydroxystéarate.

5. Lubrifiant selon l'une quelconque des revendications 1 à 4, caractérisé en ce que les solvants sont le toluène, le xylène, l'éthylbenzène ou des fractions aromatiques d'essence.

6. Lubrifiant selon la revendication 5, caractérisé en ce que les solvants se trouvent sous forme de mélange avec du méthanol, de l'éthanol, du propanol, de l'isopropanol, du butanol, de l'hexanol, de l'octanol, du décanol.

7. Lubrifiant selon la revendication 6, caractérisé en ce que les solvants sont constitués de 100 à 50% en poids de toluène, de xylène, d'éthylbenzène ou de fractions aromatiques d'essence et de 0 à 50% en poids de méthanol, d'éthanol, de propanol, d'isopropanol, de butanol, d'hexanol, d'octanol et/ou de décanol.

8. Procédé pour la préparation du lubrifiant selon l'une quelconque des revendications 1 à 7, caractérisé en ce qu'on fait fondre de l'ester d'acide gras de pentaérythritol et de l'ester méthylique d'acide gras, qu'on dissout le bain de fusion ainsi obtenu dans un solvant et qu'on refroidit à température ambiante.

9. Procédé selon la revendication 8, caractérisé en ce que un ester d'acide gras de pentaérythritol et un ester méthylique d'acide gras sont fondus à environ 80°C.

10. Utilisation du lubrifiant selon l'une quelconque des revendications 1 à 7 pour des fils de bobine en cuivre laqués, de préférence utilisés dans des moteurs hermétiques.
